# EUROPEAN PATENT APPLICATION

(11) **EP 1 106 071 A2**
(43) Date of publication of application: **13.06.2001**
(21) Application number: 00310843.8
(22) Date of filing: 06.12.2000
(51) Int. Cl.: A23C 15/14, A23L 1/22, A23C 13/14, A23C 19/05, A23C 19/076, A23L 1/23, A23C 19/082

(54) **Butterfat fractions for use in food products**

(30) Priority: 07.12.1999 US 456238
(71) Applicant: KRAFT FOODS, INC., Northfield, Illinois 60093 (US)
(72) Inventor: Silver, Richard Stuart, Wilmette, Illinois 60091 (US); Hayashi, David Kay, Chicago, Illinois 60614 (US); Mehnert, David Webb, Lake Villa, Illinois 60046 (US); Moran, James William, Antioch, Illinois 60002 (US)
(74) Representative: Eyles, Christopher Thomas

(57) **Abstract**

The present invention relates to inventive butterfat fractions used in addition to or in place of some or all of the "native" fat in a food product. The invention also relates to methods for preparing healthy food products with the inventive butterfat fractions. The inventive butterfat fractions have a complete meltpoint below about 25°C and are flavored, emulsified and/or treated with enzymes or microbes. Examples of enzymes used to treat the butterfat fractions or butterfat fraction emulsions are esterases (such as lipase) and desaturase enzyme systems including genetically modified systems; examples of microbes are *Lactococcus lactis, Lactococcus cremoris, Lactococcus lactis diacetylactis, Leuconostoc cremoris, Lactobacillus helveticus, Luctobacillus casei, Micrococcus sp.,* and *Pediococcus sp.* The microbes may be added as attenuated, frozen, or freeze-dried cultures. Food products having reduced levels of saturated fatty acids, increased levels of monounsaturated fatty acids and/or reduced levels of total fat may be produced using the inventive butterfat fractions.

## Description

### BACKGROUND OF THE INVENTION

### Field of the Invention

This invention relates to healthy and nutritional food products and the development of flavors for use in the production of these food products. The healthy food products have reduced levels of saturated fatty acids, increased levels of monounsaturated fatty acids and reduced levels of total fat.

### Discussion of the Prior Art

Flavor is an elusive, complex, yet necessary component of foods. Flavors have volatile and non-volatile components, which provide tastes, odors, and mouth sensations to edible food products. The source of a flavor in a food may vary. Flavors may be (1) natural to a particular food system in that they are generated in the routine process of manufacturing that food, such as a natural cheese flavor; (2) the result of a process where the flavor may be pre-formed, isolated and then added to a food, such as a spice flavor; or (3) synthetically formulated from simple base materials, such as inorganic salt flavors.

Butterfat provides flavors, which are very popular with consumers. Unfortunately butterfat in its native form has elements which are considered by some in the nutritional community and consumer groups to be undesirable. Long chain, highly saturated fats have been implicated in coronary heart disease and this association has caused many consumers to overlook other wholesome and highly nutritious components within cheese products.

Consumers have indicated that they would eat more low fat products if they liked the taste. (C. M. Bruhn et al., "Consumer Attitudes and Market Potential for Dairy Products Utilizing Fat Substitutes" *J of Dairy Sci.,* (1992) 75:2569-2577).
Although low fat food products can successfully be manufactured. their flavor is often unsatisfactory to consumers when compared to the flavor of the comparable product, which contains fat at the natural or "full fat" level. This is a particular problem for dairy products, which rely on milk or butterfat, in part, for flavor. Fat-free and/or reduced fat food products would win greater consumer acceptance if the flavor were closer to parity with the full-fat equivalent. Since fat-free products have lower levels of fat, it is desirable that any fat, which is present in the food, have maximum flavor impact.

Recognizing the importance of flavor to the consumer, attempts have been made to improve the flavor of reduced fat, low fat and fat-free products. Problems have arisen, for example, in the attempt to preserve the milk fat flavor in dairy products designed to meet trends in consumers' eating patterns based on health-conscious avoidance of high fat and/or high cholesterol foods. Therefore, the need still exists for a simple, reproducible, relatively inexpensive method to create flavors, which are acceptable to consumers, without defeating the goal of manufacturing a healthy product.

The compositions of the present invention address the need to produce products having low levels of fat but good flavor and which do not contribute to the health problems associated with fat-containing products. The significance of the present invention lies in the ability to produce foods such as natural cheeses that have not only extremely high quality texture, flavor and melt performance, but also improved overall nutritional profile.

### SUMMARY OF THE INVENTION

The present invention relates to inventive butterfat fractions used in addition to, or in place of, some or all of the "native" fat in a food product, *i.e.* the fat that is normally present in the food prior to the application of the invention. The invention also relates to methods for preparing healthy food products with the inventive butterfat fractions. The inventive butterfat fractions have a complete meltpoint below about 25°C and are flavored. emulsified and/or treated with enzymes or microbes. Where the inventive butterfat fraction is used to replace some or all of the fat in a food product having only a small amount of fat. the inventive butterfat fraction acts as a high efficiency flavor which unexpectedly provides a product with exceptional flavor despite the removal of much of the fat -- providing more flavor per unit of fat (*e.g.* wt.%) than does the same amount of unfractionated or whole native fat. The inventive butterfat fraction has a reduced level of saturated fat and a complete meltpoint below about 25°C, *i.e.,* the fraction contains no solid fat content at a temperature above 25°C. The complete meltpoint of the inventive butterfat fraction is preferably below about 15°C and most preferably below about 10°C.

Food products in which the inventive butterfat fraction may be used are dairy-flavored products such as natural cheeses, process cheeses and filled cheese, cream cheese, ice cream, spreads, cultured products such as yogurt and kefir, cottage cheese, sour cream, salad dressings, confections such as chocolate, baked goods such as cookies, breads, cakes, and pies, meat products such as processed lunch meats, meat spreads and fermented meats such as sausage. In addition, the inventive butterfat fraction may also be added to analog dairy products in which part or all of the dairy proteins are replaced by non-dairy proteins such as soy protein.

The food products produced using the inventive butterfat fractions may have reduced levels of saturated fatty acids, increased levels of monounsaturated fatty acids and/or reduced levels of total fat.

### DESCRIPTION OF THE FIGURES

Figure 1 shows a melting profile of anhydrous butterfat.

Figure 2 shows a melting profile of a 45°F (approx. 7°C) butterfat fraction.

Figure 3 shows a melting profile of a 55°F (approx. 13°C) butterfat fraction.

### DETAILED DESCRIPTION OF THE INVENTION

Fats such as butterfat are known to be very heterogeneous mixtures of triglyceride fats. Methods have been developed which separate the specific fats of butterfat by fractionation. These methods can be used to reduce long chain saturated components. Our research has identified that the smaller, more volatile fats play the largest role in flavor development in Cheddar cheese (Mehnert, U.S. Pat. No. 5,462,755). In the mid 1970's, significant work was done removing the harder fat fraction from butterfat to yield a soft butter product (Tucker. *XLX International Dairy Congress.* 1974. 1E. 762-763; Malkamaki. *XLX International Dairy Congress,* 1974 1E, 626-629; Thomas, *Australian Journal of Dairy Sci.*, Vol. 28 (2) pp. 77-80). These researchers also demonstrated that the hard fats that were removed to soften butter could then be reintroduced to natural cheese as an outlet. However, while disposal of the hard fraction by this method was cost effective and did not change taste or texture, the fact that the nutritional character of the cheese was reduced was not addressed.

Rather than merely reducing overall fat levels, the approach taken in the present invention reduces the overall fat level while maintaining the good tasting and "better for you" fats which exist in fats by removing the less healthy component fats to form a butterfat fraction which is then added to the food. For example, cheeses containing the inventive butterfat fraction will provide consumers with a healthy alternative to conventional cheese by virtue of the elimination of a significant portion of the long chain highly saturated hard fats. The inventive butterfat fraction may be used as a replacement for part or all of the fat in a food product or, in small amounts, as a high efficiency flavor ingredient in products such as cheeses where flavor and texture are dependent on fats such as butterfat.

### Preparation of the Butterfat Fraction

The butterfat fraction which is used in the inventive butterfat fraction is prepared by separating the fat obtained from a fat source into fractions of different chemical and physical composition, *i.e.,* into low-melting butterfat fractions. The fat source for preparing the butterfat fraction may vary depending upon the application. Examples of fat sources which may be used are animal fats such as milk, whole milk fat or butterfat, *e.g.,* anhydrous butterfat. A preferred source of fat is cow's milk, but other sources of fat can be used, e.g., goat's milk, mare's milk, sheep's milk, coconut oil, palm kernel oil, canola oil, sunflower oil and other vegetable fats or oils.

Fat can be separated into fractions of different chemical and physical composition by any of a number of processing technologies. Fractionation of fat for the practice of the present invention is suitably performed by one of the many methods known to the art. Choice of a method generally depends on the equipment available. The most widely practiced form of fractionation is that of crystallization, wherein a mixture of triglycerides is separated into two or more different melting fractions. There are other methods, which rely on the solubility or volatility of the triglyceride species to separate triglycerides.

Crystallization fractionation is a thermally controlled process in which milk fat is subjected to a specific temperature-time profile to allow a portion of the milk fat to crystallize. The crystals are then physically separated from the liquid fraction using vacuum filtration, pressure filtration in a membrane filter press, centrifugation, an aqueous detergent solution, and other separation techniques. See Kerry E. Kaylegian et al., "Performance of Selected Milk Fat Fractions in Cold-Spreadable Butter," *J. Dairy Sci.,* (1992), 75:3307-3317.

The term "dry fractionation" or "solventless fractional crystallization" frequently is used to describe fractionation processes such as winterization or pressing. Winterization is a process whereby a small quantity of material is crystallized and removed from edible oils by filtration to avoid clouding of the liquid fractions at refrigeration temperatures. Originally this processing was applied to cottonseed oil by subjecting the oil to ambient winter temperatures, hence the term "winterization." Today many oils, including cottonseed and partially hydrogenated soybean oils, are winterized. A similar process called "dewaxing" can be utilized to clarify oils containing trace amounts of clouding constituents.

Pressing is also a fractionation process sometimes used to separate liquid oil from solid fat. The process squeezes or "presses" the liquid oil from the solid fat by means of hydraulic pressure. This process is used commercially to produce hard butters and specialty fats from such oils as palm kernel and coconut.

The term "solvent fractionation" or "fractional crystallization from solvent" describes a process for the crystallization of a desired fraction from a mixture of triglycerides dissolved in a suitable solvent. Examples of suitable solvents include acetone and hexane. Fractions may be selectively crystallized at different temperatures after which the fractions are separated and the solvent removed. Solvent fractionation is practiced commercially to produce hard butters, specialty oils, and some salad oils from a wide array of edible oils. Fractionation by crystallization from melted milk fat is also known as fractionation from the melt. or dry fractionation, because it does not employ solvents or additives. (E. Deffense, "Milk Fat Fractionation Today", AOCS Meeting, Toronto, May 10, 1992.)

Milk fat can also be fractionated by supercritical extraction. Milk fat fractions are selectively dissolved in the supercritical solvent, *e.g.,* carbon dioxide. by changing the temperature and pressure of the system. The solvent vaporizes at atmospheric conditions and. thus, does not leave residues in the milk fat fractions.

Cully *et al.* in U.S. Pat. No. 5.061.505 have shown that 75% of the cholesterol can be removed from the butter fat using a method of extraction with carbon dioxide and by connecting an absorbent column filled with zinc chloride. Supercritical extraction operating under conditions in which the temperature and pressure of the solvent gas are higher than their critical value, is suitable for enriching or improving compounds.

Milk fat has also been fractionated by "short path distillation" or "molecular distillation" on a research scale. Short path distillation is a form of vacuum distillation used to separate compounds based on their molecular weight, melting temperature, volatility, and intermolecular interaction.

The method of fractionating the fat, the composition of the fractions selected to add to a food, the food to which a fraction is added, the point in the food processing when a fraction is added, and the nature of the components added in conjunction with the fraction will vary depending upon the application for which compositions and methods of the present invention are used.

### Use of the Inventive Butterfat Fraction.

The inventive butterfat fraction is used as a replacement for, or in addition to, some or all of the native fat in a food or in addition to, or in place of, the fat in any other fat-containing composition such as in a handcream. For example, the fat content in a cheese ranges from about 15 wt.% to about 40 wt.%. Where a reduced fat product is desired, some or all of the native fat may be replaced by the inventive butterfat fractions resulting in a cheese product with a fat level ranging from as little as 0.1 wt.% to about 30 wt.%. If desired, fat may first be removed from a food, *e.g.,* by standard skimming processes such as centrifugation. Next, an amount of the inventive butterfat fraction consistent with the fat requirements for the product is incorporated into the food in a manner consistent with the production of that food. For example, in the production of cheese, the inventive butterfat fraction is incorporated into skim milk to form what is termed a "filled milk" by methods known to those knowledgeable about the production of filled milks and cheeses. After delivery of the filled milk to cheese vats, the steps for making a cheese utilizing the native fat replacer are the same as those for the production of current full fat, reduced fat and light cheeses.

In part the development of flavor in Cheddar as well as other natural cheeses is a result of the breakdown or digestion of butterfat by enzymes from milk and microorganisms. In fat-free cheese, the substrate or precursors to these flavors are removed by replacing the removed milk fat with a portion, or fraction which is easily digested. Some or all of the fat flavors may be generated with no residual fat left in the cheese.

A natural cutting cheese containing Cheddar, Swiss, Mozzarella, *etc.,* containing reduced fat may be prepared using the inventive butterfat fraction and skim milk (which contains approximately 90.60% water, 5.3% lactose. 0.03% fat, 2.62% casein, 0.72% whey protein and 0.72% salts) as follows: The inventive butterfat fraction is blended with skim milk for approximately 60 to 90 seconds at 150°F (65.6°C) and the blend is then homogenized at a pressure of from about 1200 to about 2000 psi. (about 8274 to about 13790 kPa). This homogenized blend is then mixed with skim milk and the mixture pasteurized at a temperature of about 165°F (73.9°C) for about 16 seconds to form a "cheese vat milk". The cheese vat milk contains from about 1.0 wt.% to about 3.6 wt.% of the butterfat fraction with the balance being skim milk. The cheese vat milk may then be used in place of conventional cow's milk to make cheese by standard cheesemaking procedures. For example, the cheese vat milk is heated in a vat to a temperature of about 88°F (31.1 °C). Starter cultures such as *Lactococcus lactis, Lactococcus cremoris, Lactobacillus helveticus,* and *Streptococcus thermophilis,* adjunct cultures such as *Lactococcus lactis,* subspecies *diacetylactis,* and any ripening enzymes *(e.g.,* lipase, protease and peptidase enzymes) are added to the cheese milk and the gently agitated mixture is ripened for about 30 to about 60 minutes at 88°F (31.1°C). Coagulant is then added to the mixture and agitation is suspended for approximately 30 minutes to produce a coagulum. The coagulum is then cut into 3/8" (9.5cm) cubes and allowed to heal for about 15 minutes at which time the temperature is raised to about 102°F (38.9°) over a 30 minute period with gentle agitation. The mixture is then agitated until the curd pH reaches 6.0. The whey is drained from the curd over a 30 minute period and the curd is then salted when the pH of the curd is about 5.5 to about 5.6. If desired. additional cheese ripening enzymes may be added with the salt. The cheese is then pressed under a vacuum and the resulting cheese blocks are packaged in air-tight plastic bags. The cheese blocks are then cured until flavor develops.

### The Butterfat Fraction as a High Efficiency Flavor ingredient.

In another aspect, the present invention relates to the use of the inventive butterfat fraction as a high efficiency flavor ingredient. It was surprising and unexpected that the inventive butterfat fractions would provide more flavor per unit than fats such as butterfat themselves. The inventive butterfat fraction acts as a high efficiency flavor ingredient because (1) its flavor is more intense (and therefore more "efficient") than anhydrous butterfat because it contains a higher percentage of flavor components; (2) it is a better flavor carrier because it is liquid at a lower temperature than whole fats such as butterfat, (e.g., it would be liquid in a refrigerator); and (3) it is a better precursor to flavor because it is enriched in components which develop better flavor. Further, by preparing the inventive butterfat fraction prior to its addition to the food, the flavor development, which is achieved, is much greater than in a diluted system because there is control over the conditions at which the flavor is developed. *In situ* flavor development is subject to the conditions, *e.g.,* temperature and pH, at which the food itself must be maintained -- conditions not necessarily optimal for flavor development.

Where the inventive butterfat fraction is used as a flavor ingredient, the inventive butterfat fraction is preferably added to the food-preparation process in the form of an emulsion having an average droplet size of less than 100 microns. The emulsion is typically prepared by combining the inventive butterfat fraction with an aqueous composition to form a water- and fat-containing mixture comprising from about 1 wt.% to about 90 wt.%, preferably from about 1.5 wt.% to about 51 wt.% fat. most preferably from about 15 wt.% to about 25 wt.% fat, and then homogenizing the mixture to obtain the emulsion. Optionally, the butterfat fraction or butterfat fraction emulsion may be treated with enzymes and/or microbes before or after emulsification. The aqueous composition optionally comprises an emulsifier suitable for forming an oil-in-water emulsion. Flavor additives are added to the butterfat fraction or to the emulsion either before or after the formation of the butterfat fraction emulsion.

Examples of aqueous compositions are dairy protein-containing fluids such as skim milk, non-fat dry milk, whey, whey protein concentrate, acid casein. rennet casein, milk protein. milk protein concentrate. proteolytic enzyme digest of casein. proteolytic enzyme digest of whey proteins. and proteolytic enzyme digest of milk proteins; and non-dairy protein-containing fluids such as soy protein. soy protein isolate, soy protein proteolytic enzyme hydrolysate, and egg white.

Examples of emulsifiers which assist in the formation and/or stabilization of oil in water emulsions are non-proteinaceous emulsifiers such as polyoxyethylene sorbitan monooleate, polyoxyethylene sorbitan monostearate. sodium steroyl lactylate, polyglycerol esters of fatty acids, e.g., decaglycerol stearate or decaglycerol oleate, lyso-phosphatidyl choline, sucrose monostearate, sucrose monooleate, and sucrose monopalmitate; and proteinaceous emulsifiers such as sodium caseinate, calcium caseinate, whey protein isolate, and milk protein isolate.

The water- and fat-containing mixture made for the preparation of the butterfat fraction emulsion may be prepared by making a pre-emulsion of the butterfat fraction and the aqueous composition using a high speed mixer (*e.g.,* made by Tekmar or Ika). Homogenization may be done in a high pressure device (*e.g.*, a Gaulin homogenizer or a Microfluidizer) to form the emulsion. Homogenization of the mixture at 6000 psi. (41368 kPa) pressure has been found to give emulsions with a fat droplet mean particle size in the range of 2-5 microns. In some cases it is beneficial to make submicron emulsions which require the use of art emulsifier and longer residence time in the homogenization zone. For example, emulsification of 22% low-melting butterfat fraction using 0.7% sodium caseinate emulsifier and three passes at 6000 psi. (41368 kPa) has been found to give emulsions with a mean particle size of 0.3 to 0.4 microns. Such emulsification increases the surface area for enzymatic and microbial reaction on the water-insoluble butterfat fraction droplets, thereby increasing the extent of flavor generation through such reactions.

Examples of enzymes used to treat the butterfat fractions or butterfat fraction emulsions are esterases (such as lipase) and desaturase enzyme systems including genetically modified systems; examples of microbes are *Lactococcus lactis, Lactococcus cremoris, Lactococcus lactis diacetylactis, Leuconostoc cremoris, Lactobacillus helveticus, Lactobacillus casei, Micrococcus sp.,* and *Pediococcus sp.* The microbes may be added as attenuated. frozen, or freeze-dried cultures.

The present invention also relates to a method for the delivery of a flavor additive to a food product comprising adding to the food product an inventive flavored butterfat fraction comprising at least one flavor additive and a butterfat fraction which acts as a carrier for the flavor additive, the butterfat fraction having a complete meltpoint below about 25°C. Additional flavors or flavor additives may be added to the butterfat fraction or to the butterfat fraction emulsion either before or after the formation of the butterfat fraction emulsion. Where fat-soluble or lipophilic natural or synthetic compounded flavors are added to a cheese product, it is beneficial to dissolve such flavors in the butterfat fraction prior to making the emulsion. In this case, flavors are encapsulated within the droplets of the butterfat fraction, which acts as a carrier and protects the flavor from degradation and binding to other ingredients in the cheese and increases the surface area for flavor release.

Examples of flavor additives are primarily oil soluble materials such as essential oils, terpenes, hydrocarbons, esters, lactones, fatty acids containing 6-12 carbon atoms, higher molecular weight alcohols (C₈ and above) and primarily water soluble materials such as low molecular weight alcohols, low molecular weight (C₁-C₆) fatty acids, lower molecular weight aldehydes and ketones (C₁-C₆), lactones, peptides, amino acids, nucleotides. It should be noted that alcohols, fatty acids, aldehydes, ketones, lactones and other oxygenated flavor ingredients may be primarily water soluble when they are low molecular weight *(e.g.,* C₁-C₄) but primarily oil soluble when high molecular weight *(eg,* >C₁₀) and amphiphilic (some water affinity and also some oil affinity) or surface active in the intermediate range. However, even the low and high molecular weight species have some amphiphilic or surface active properties.

Small amounts of the butterfat fraction or the butterfat fraction emulsion may be added as flavor ingredients to foods to yield no-fat and/or reduced fat food products having high efficiency flavor. Examples of foods to which the butterfat fraction and butterfat fraction emulsion may be added are dairy-flavored products such as natural cheeses, process cheeses and filled cheese, cream cheese, ice cream, spreads such as margarine, cultured products such as yogurt and kefir, cottage cheese, sour cream, salad dressings. confections such as chocolate, and baked goods such as cookies, breads. cakes, and pies. Included in this invention are analog dairy products in which part or all of the dairy proteins are replaced by non-dairy proteins. for example soy protein.

The following examples are included to demonstrate some of the preferred embodiments of the invention. While the compositions and methods of this invention have been described in terms of preferred embodiments, it will be apparent to those of skill in the art that variations may be applied to the compositions and method and in the steps or in the sequence of steps of the methods described herein without departing from the scope of the invention. More specifically, it will be apparent that certain agents which are both chemically and physiologically related may be substituted for the agents described herein while the same or similar results would be achieved. All such similar substitutes and modifications apparent to those skilled in the art are deemed to be within the scope of the invention as defined by the appended claims.

### EXAMPLE 1

Butterfat enriched in low melting short-chain fatty acids was isolated by fractionation and used for production of cheese having reduced saturated fat and less long chain fatty acids. A preferred source of fat for fractionation is butterfat. The following method relates to the fractionation of butterfat by crystallization. Results of fractionation are shown in Tables 1 and 2:

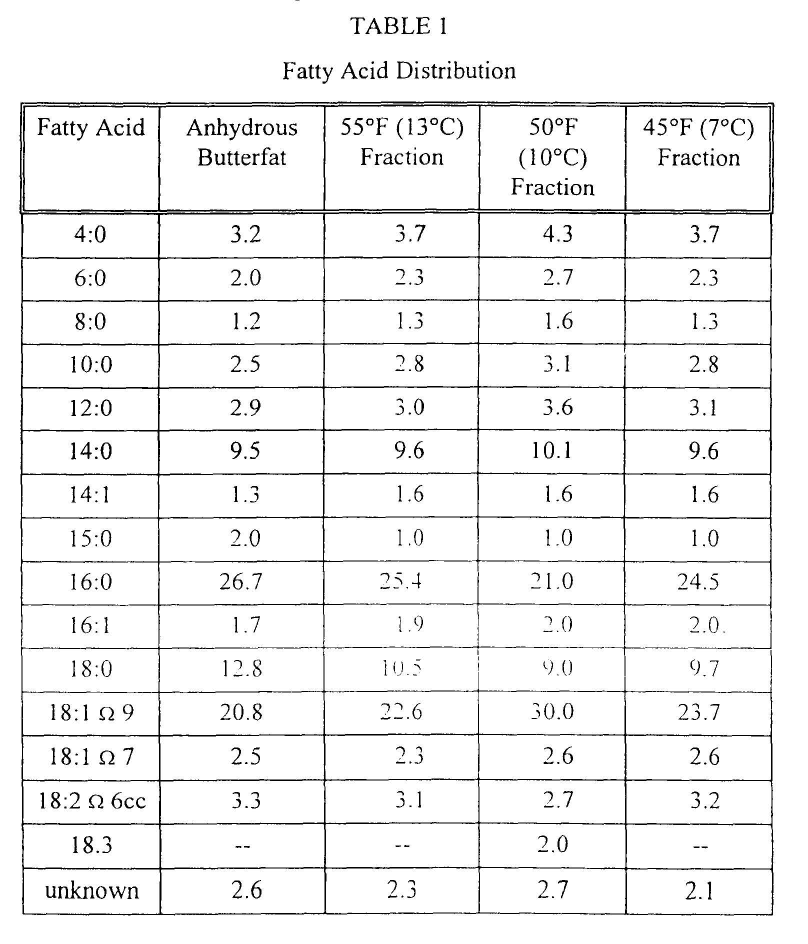

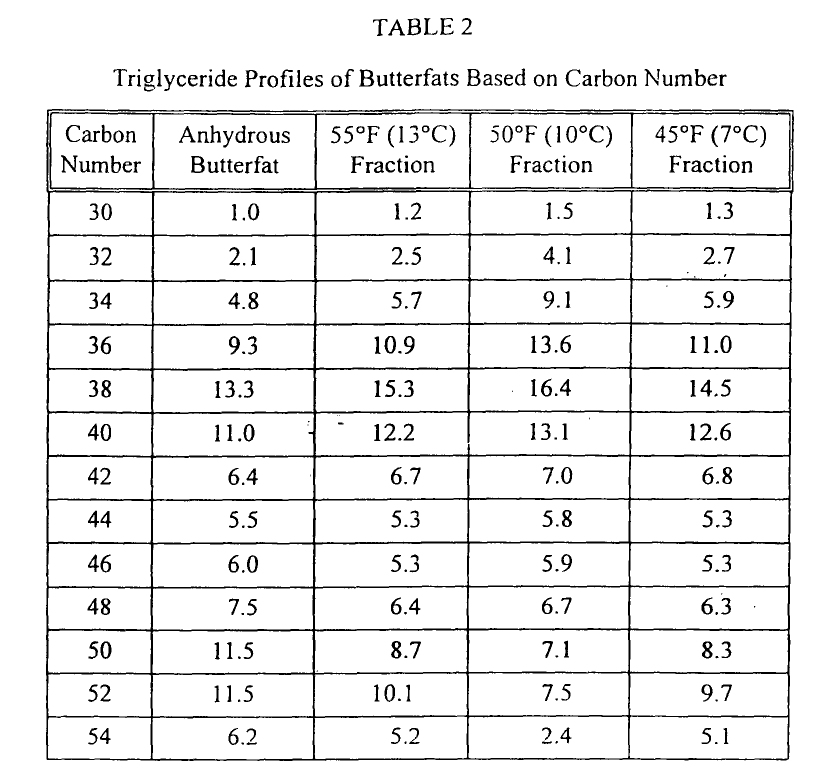

Tables 1 and 2 compare control anhydrous butterfat and butterfat fractionated by the method below.
1. Approximately 1000 grams of anhydrous butterfat is melted at a temperature of 140°F (60°C) by means of a steam-jacketed kettle.
2. The melted butterfat from step I is fractionated into two components, the first 120 grams of crystallized butterfat which separates out at approximately 85 °F (29.4°C): the second approximately 860 grams is liquid butterfat.
3. The liquid butterfat of step 2 is further fractionated at approximately 72°F (22.2°C) into approximately 330 grams of crystallized butterfat and 500 grams of liquid butterfat.
4. The liquid of step 3 is further fractionated at approximately 55 degree F (12.8°C) into 300 grams crystallized fat and 200 grams of liquid butterfat.
5. The liquid of step 4 is further fractionated at approximately 50 degree F (10°C) into 90 grams crystallized fat and 110 grams of liquid butterfat.
6. The liquid of step 5 is further fractionated at approximately 45 degree F (7.2°C) into 50 grams crystallized fat and 60 grams of liquid butterfat.
7. The liquid component of step 3 is further fractionated at approximately 40°F (4.4°C) into 30 grams of crystallized butterfat and 30 grams of liquid butterfat.
8. Creams were prepared by blending either anhydrous butterfat or fractionated butterfat at 40 wt.% with skim milk and then homogenizing about 2000 psi. (13790 kPa).

The fatty acid distribution was determined by hydrolyzing the triglycerides and quantifying the free fatty acids produced. These results appear in Table 1. Carbon atom chain lengths were determined and results appear in Table 2.

### EXAMPLE 2

A one-third less fat Natural Cheddar cheese containing reduced saturated fat butter fraction was prepared using the inventive butterfat fraction invention prepared in Example 1 and skim milk.

Cheese containing reduced saturated fat may be prepared using the inventive butterfat fraction and skim milk (which contains approximately 90.60% water, 5.3% lactose, 0.03% (40°F (4.4°C) fraction) fat, 2.62% casein, 0.72% whey protein and 0.72% salts) as follows: The inventive butterfat fraction is blended with skim milk for approximately 60 to 90 seconds at 150°F (65.6°C) and the blend is then homogenized at a pressure of from about 1200 to about 2000 psi. (about 8273 to 13790 kPa). This homogenized blend is then mixed with skim milk and the mixture pasteurized at a temperature of about 165 °F (73.9°C) for about 16 seconds to form a "cheese vat milk". The cheese vat milk contains from about 1.8% to about 2.2% butterfat fraction with the balance being skim milk. The cheese vat milk may then be used in place of conventional milk to make cheese by standard cheesemaking procedures, for example: The cheese vat milk is heated in a vat to a temperature of about 88 °F (31.1 °C). Starter cultures such as *Lactococcus lactis, Lactococcus cremoris, Lactobacillus helveticus,* and *Streptococcus thermophilis,* adjunct cultures such as *Lactococcus lactis* subspecies *diacetylactics,* and any ripening enzymes (e.g., lipase, protease, and peptidase enzymes) to the cheese milk and the mixture is ripened for about 30 to about 60 minutes at 88°F (31.1 °C) with gentle agitation. Coagulant is then added to the mixture and agitation is suspended for approximately 30 minutes to produce a coagulum. The coagulum is then cut into 3/8" (9.5cm) cubes and allowed to heal for about 15 minutes at which time the temperature is raised to about 102°F (38.9°C) over a 30 minute period with agitation. The mixture is then stirred until the curd pH reaches 6.0. The whey is drained from the curd over a 30 minute period and the curd is then salted with NaCI when the pH of the curd is about 5,5 to about 5.6. If desired, additional cheese ripening enzymes may be added with the salt. The cheese is then pressed under a vacuum and the resulting cheese blocks are packaged in air-tight plastic bags. The cheese blocks are then cured until flavor develops.

### EXAMPLE 3

Cottage Cheese containing reduced saturated fat was prepared using the inventive butterfat fraction prepared in Example 1. Cottage cheese dressing and dry cottage curd are blended at a ratio of 1/3 dressing, 2/3 dry curd.

### Preparation of the Cottage Cheese Curd

1. Skim milk is provided by separating whole milk to skim and cream. The skim is used for the manufacture of the cottage cheese curd and the cream can be used for preparation of the cream dressing.
2. The skim milk is pasteurized and cooled to 88°F (31.1°C) (range is 86-90 °F [30.0 to 32.2°C]) and is placed in a cottage cheese vat.
3. Lactic starter culture *(Lactococcus cremoris, Lactococcus lactis)* is added at about 3-5% wt.% into the skim milk. Any acceptable dairy lactic starter culture may be used.
4. A small amount of rennet is added to the skim milk about 60 minutes after the starter is added. If single strength calf rennet is used. it is used at 0.7 mL. per 1000 lb. [453.6 kg] (range is 0.6-1 mL) of skim milk. Any suitable milk coagulant can be used including fermentation-produced chymosin and microbial coagulants.
5. The milk is left without stirring for about 5 hours while maintaining the temperature between 88-90°F (31.1 to 32.2°C). The acidity of the clear whey is between 0.47-0.53%. The pH of the curd is 4.6-4.8.
6. A small curd was produced by cutting the curd with ¼ inch (6.35 cm) knives.
   Alternatively, a larger curd could be produced by using 1/2, 5/8 or ¾ inch (12.7, 15.9 or 19.1 cm) knives.
7. The curd is allowed to heal for about 20 minutes (range 15-30 minutes).
   The curd is cooked using the water in the jacket of the vat while gently stirring. The heating rate should be 1 °F (0.56°C) for each 5 minutes for the first 30 minutes with a target final temperature of 125°F (51.7°C) being reached in 90-100 minutes. The cook temperature can be adjusted in the range of 120-135°F (48.9° to 57.2°C) to obtain the desired curd firmness. The cook time can also be extended to obtain desired curd firmness.
8. The whey is drained from the curd until the surface of the curd is visible.
   The curd is washed three times with water; first with 85°F (29.4°C) water, second with 60°F (15.6°C) water, and third with 40°F (4.4°C) water. Each wash is done for 20 minutes. Phosphoric acid is added to the last wash water to adjust the curd to pH 4.8.
9. The curd is trenched after the final wash and allowed to drain further.
10. The cream dressing is added to the cooled curd.

### Preparation of the Cream Dressing

1. Two creams were prepared as described previously. One cream was made using anhydrous milkfat and the other was made using the liquid butteroil fraction (40°F [4.4°C] fraction). The fat content of the cream was about 40%.
2. These creams were used to produce a cream dressing of the following composition:
   Cream = 32%
   Salt = 2.5%
   Starch = 2.0%, alternatively, gums could be used as a stabilizer at 0.5%
   Non-fat dry milk = 9.0% (Skim milk powder)
3. The cream dressing was mixed and then homogenized at 2000 p.s.i. (13790 kPa).
4. The cream dressing was blended with the curd at the ratio of 1/3 dressing to 2/3 curd.
5. The cottage cheese was packaged and cooled.

### EXAMPLE 4

The fatty acid distributions of the Cheddar cheese of Example 2 and the cottage cheese prepared in Example 3 were analyzed by the Mojonnier method, a measure of the total fat content. The free fatty acid (FFA), moisture, protein and salt made using the inventive butterfat fraction which has reduced saturated fat. The results appear in Table 3.

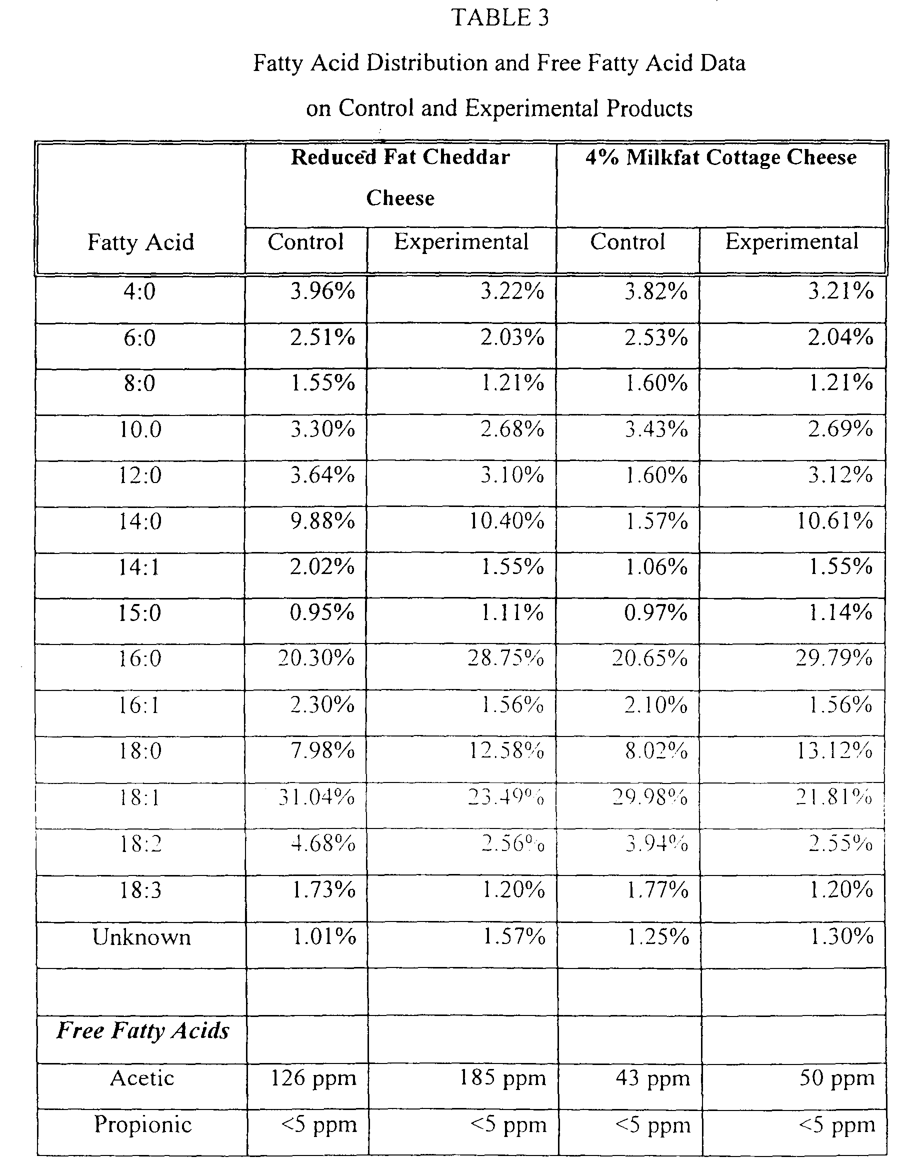

### EXAMPLE 5

### Preparation of the Inventive Butterfat Fraction

Butterfat fractions were produced and characterized chemically by carbon number and fatty acid distribution. The fatty acid distribution was determined by hydrolyzing the triglycerides and quantitating the free fatty acids produced. The results appear in Tables 9 and 10.

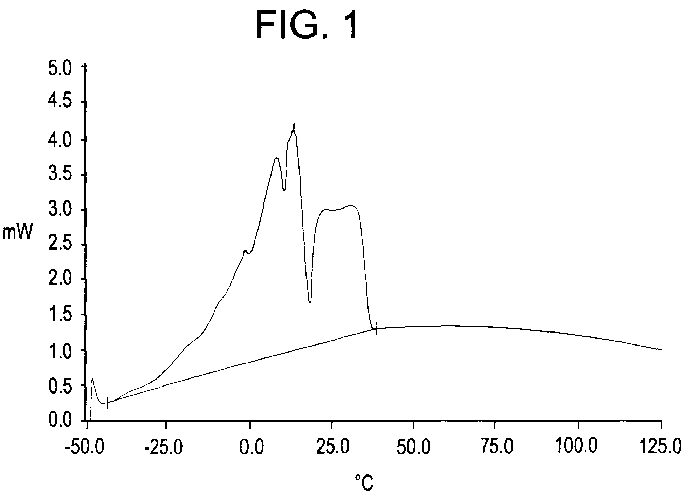

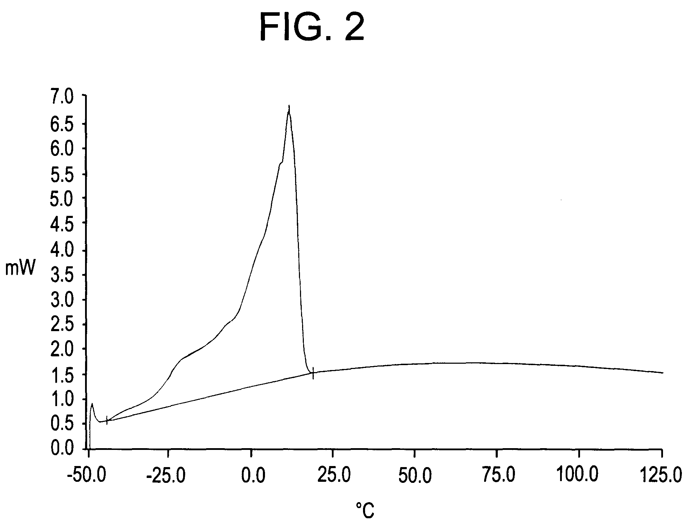

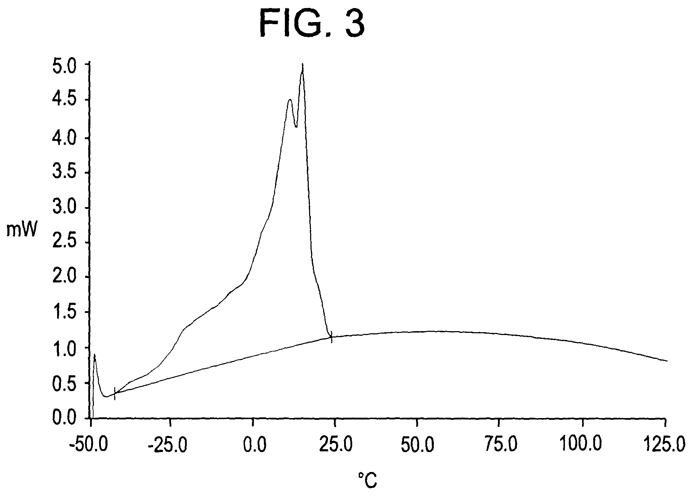

Measurement of the physical characteristics of the butterfat fraction was performed by differential scanning calorimetry which provided melting profiles showing energy v. temperature as shown in Figures 1-3. Figure 1 shows a melting profile of the starting material, anhydrous butterfat. Figure 2 shows a melting profile of a 45°F (approx. 7°C) butterfat fraction. Figure 3 shows a melting profile of a 55°F (approx. 13°C) butterfat fraction.

### EXAMPLE 6

### No-Fat Cream Cheese -- Butterfat Fraction Emulsion Treated with Enzymes

A no-fat cream cheese containing a treated butterfat fraction emulsion of the present invention was prepared as follows:

An emulsion was prepared by dispersing the 10°C butterfat fraction of Example 1 in skim milk heated to approximately 50°C, mixed using a high-shear mixer, and then homogenizing in a high pressure device. The emulsion contained approximately 22 wt.% fat and had a pH of 4.5 and a titratable acidity of 0.60.

Culture combinations of *Lactococcus lactis/Lactococcus cremoris* (Lactic), *Lactococcus lactis diacetylactis* (SD) and *Leuconostoc cremoris* (CAF) were then used to inoculate the butterfat fraction emulsion. The culture-containing emulsion was incubated at 72°F (approx. 22°C) for 20 hours. The pH after the incubation was 4.49, the titratable acidity was 0.67, and the final culture populations were Lactic at 5.7 x 10⁸ CFU (colony forming units per mL), SD at 8.0 x 10⁷ CFU, and CAF at 2.0 x 10⁷ CFU.

The treated butterfat fraction emulsion was then added as a flavor ingredient to a blend of ingredients *(i.e.,* protein concentrated skim milk, skim milk, sodium tripolyphosphate, pasteurized milk and cream, carob bean gum, salts, artificial color, xanthan gum, carrageenan, potassium sorbate, calcium propionate, cheese culture, and Vitamin A palmitate) to form a fat-free cream cheese. The treated butterfat fraction emulsion was essentially the sole source of fat in the fat-free cream cheese.

### EXAMPLE 7

### Sensory Evaluations of the Inventive Cream Cheese

Fat-free cream cheeses containing the butterfat traction of the present invention were prepared as in Example 6. The compositions appear in Table 4.

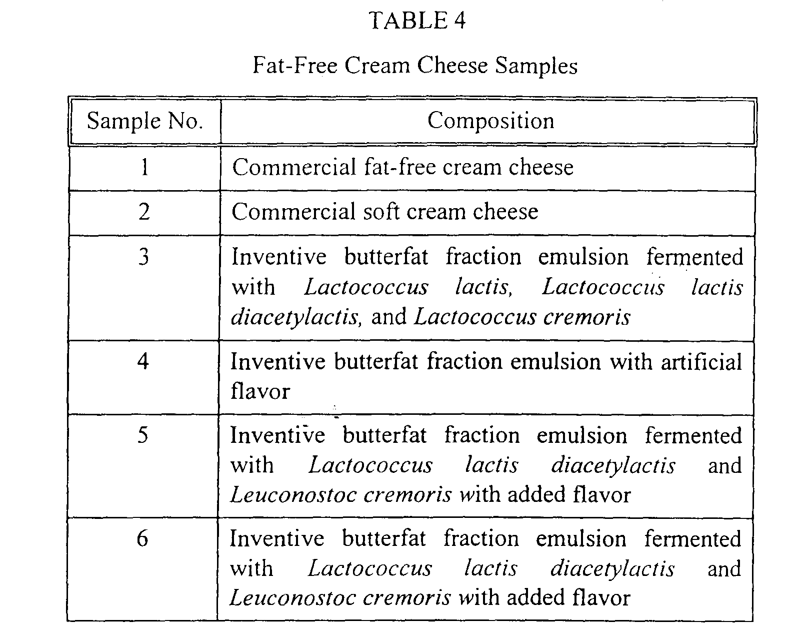

Sensory evaluations of the fat-free cream cheese samples were conducted by a panel of 50 untrained judges who were asked 10 questions. Questions and answers appear in Table 5 as the percentage of the respondents who had the observation. A summary of the Table 5 data appears in Table 6. The samples were tested randomly. Cream cheese users were included.

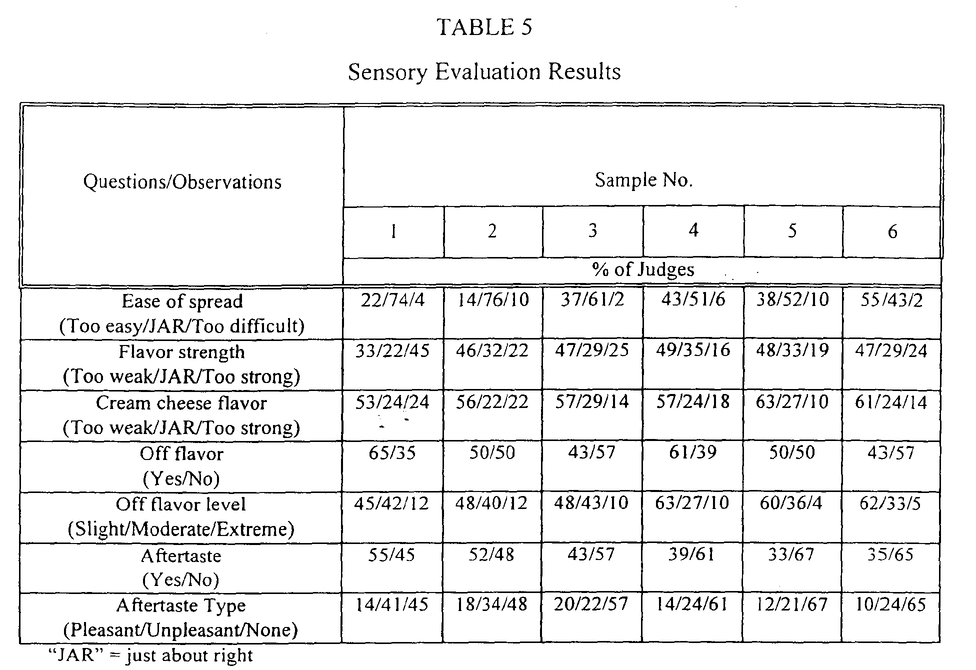

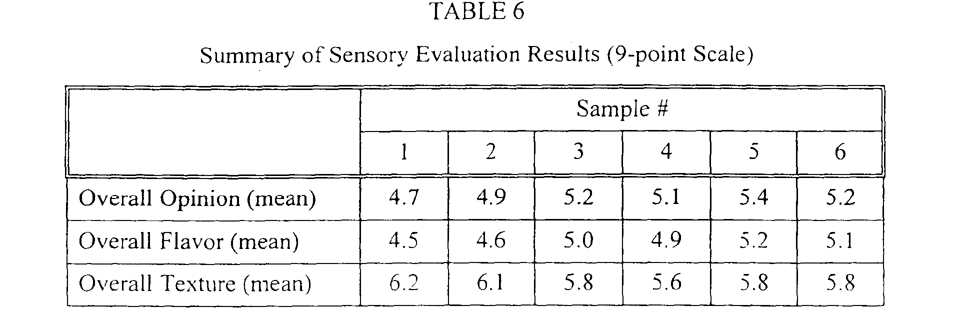

There were no significant differences between the samples overall. However, there were directional differences (88%)confidence level) for overall flavor. Sample 5 was directionally more well-liked for overall flavor than control Sample 1.

### EXAMPLE 8

### Process Cheese Prepared with Enzyme-Treated Butterfat Fraction Emulsion

A treated butterfat fraction emulsion was prepared as follows. A mixture was made with the ingredients and amounts listed in Table 7 by heating the water to 180°F (82.2°C), adding the ingredients other than the milk protein concentrate, then while mixing in a high shear rotor-stator type homogenizer, gradually adding the milk protein concentrate. A homogeneous emulsion was formed having a pH of 5.07.

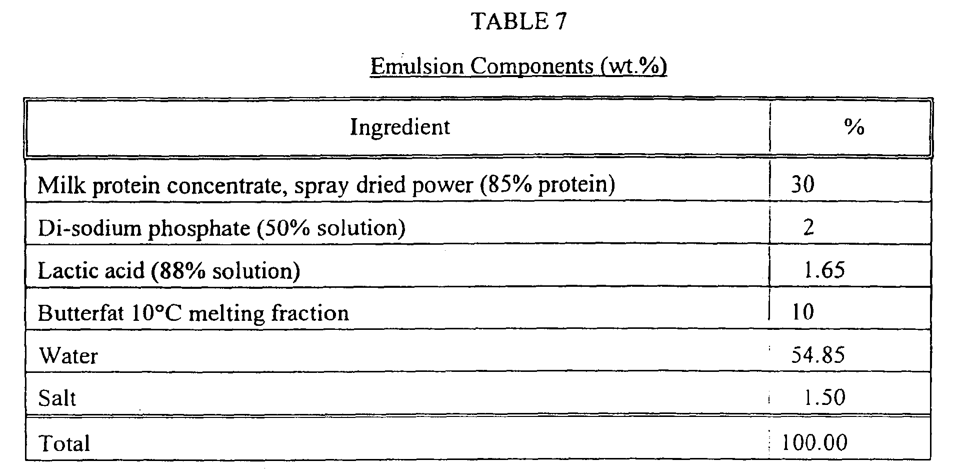

An aliquot of this emulsion was treated with enzymes by mixing the emulsion with the materials listed in Table 8.

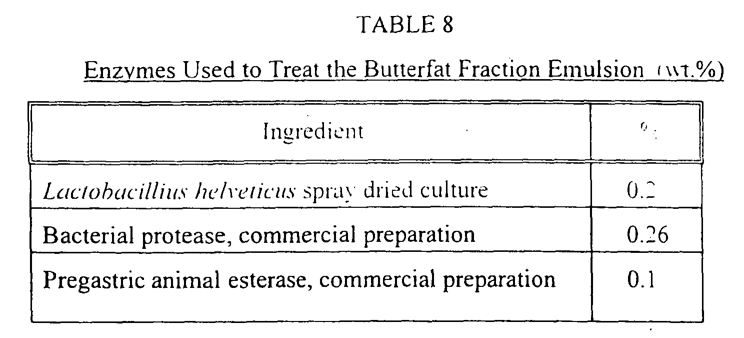

The mixture was incubated at 45°C for 29 hours. The enzymes were then deactivated by heating the mixture to 185°F (85.0°C) to form an enzyme-treated flavor. The enzyme-treated flavor was added at the 10% level to an unflavored fat-free process cheese base. This mixture was heated to 150°F (65.6°C) and formed into process cheese slices.

The process cheese slices containing the enzyme-treated flavor were compared by a taste panel with unflavored slices. The results appear in Table 9 which shows the scores on a 0 to 5 scale.

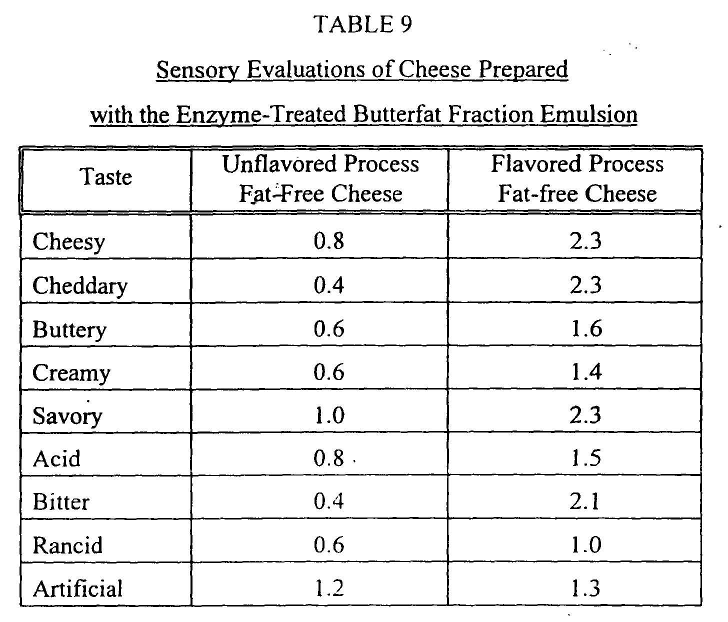

Table 9 shows that the added flavor appreciably improved the desirable cheesy/cheddary/buttery/creamy attributes while showing only a modest increase in the bitter and rancid score.

## Claims

1. A flavored butterfat fraction consisting essentially of a butterfat fraction having a complete meltpoint below about 25°C and a flavor additive.

2. A flavored butterfat fraction according to claim 1, wherein the complete meltpoint of the butterfat fraction is below about 15°C.

3. A flavored butterfat fraction according to claim 1 or claim 2, wherein the complete meltpoint of the butterfat fraction is below about 10°C.

4. A treated flavored butterfat fraction wherein a flavored butterfat fraction according to any one of claims 1 to 3 is further treated with enzymes and/or microbes.

5. A treated flavored butterfat fraction according to claim 4, wherein the enzymes are esterases, or desaturase enzyme systems.

6. A treated flavored butterfat fraction according to claim 5, wherein the esterase is a lipase.

7. A treated flavored butterfat fraction according to claim 4, wherein the microbes are chosen from *Lactococcus lactis, Lactococcus cremoris, Lactococcus lactis diacetylis, Leuconostoc cremoris, Lactobacillus helveticus, Lactobacillus casei, Micrococcus sp.,* and *Pediococcus sp.*

8. A flavored butterfat fraction emulsion consisting essentially of an emulsion prepared with a flavored butterfat fraction according to any one of claims 1 to 7.

9. A butterfat fraction emulsion prepared with a butterfat fraction having a complete meltpoint below about 25°C.

10. A butterfat fraction emulsion according to claim 9, wherein the complete meltpoint of the butterfat fraction used to prepare the butterfat fraction emulsion is below about 15 °C.

11. A butterfat fraction emulsion according to claim 9 or claim 10, wherein the complete meltpoint of the butterfat fraction used to prepare the butterfat fraction emulsion is below about 10°C.

12. A butterfat fraction emulsion wherein a butterfat fraction emulsion according to any one of claims 8 to 11 is further treated with enzymes and/or microbes.

13. A butterfat fraction emulsion according to claim 12, wherein the enzymes are esterases, or desaturase enzyme systems.

14. A butterfat fraction emulsion according to claim 13, wherein the esterase is a lipase.

15. A butterfat fraction emulsion according to claim 12, wherein the microbes are chosen from *Lactococcus lactis, Lactococcus cremoris, Lactococcus lactis diacetylis, Leuconostoc cremoris, Lactobacillus helveticus, Lactobacillus casei, Micrococcus sp.,* and *Pediococcus sp.*

16. An emulsion according to any one of claims 8 to 15, prepared by a process comprising the steps of:
(a) forming a water- and fat-containing mixture by combining the butterfat fraction with an aqueous composition, optionally comprising an emulsifier, to form said mixture which comprises from about 1 wt.% to about 90 wt.% fat, and
(b) homogenizing the mixture to obtain an emulsion having an average droplet size of less than 100 microns.

17. An emulsion according to claim 16, wherein the aqueous composition comprises a dairy protein-containing fluid, a non-dairy protein containing fluid or mixtures thereof; wherein the dairy protein-containing fluid is chosen from skim milk, non-fat dry milk, whey, whey protein concentrate, acid casein, rennet casein, milk protein, milk protein concentrate, proteolytic enzyme digest of casein, proteolytic enzyme digest of whey proteins, and proteolytic enzyme digest of milk proteins; and wherein the non-dairy protein-containing fluid is chosen from soy protein, soy protein isolate, soy protein proteolytic enzyme hydrolysate, and egg white.

18. An emulsion according to claim 16 or claim 17, wherein the mixture comprises from about 1.5 wt.% to about 51 wt.% fat.

19. A butterfat fraction-containing food product prepared by a process comprising
(a) optionally removing some or all of the fat native to the food product, and
(b) adding to a food product a flavored butterfat fraction according to any one of claims 1 to 7 or a flavored butterfat fraction emulsion according to any one of claims 8 to 18.

20. A method for the delivery of a flavor additive to a food product comprising adding to the food product a flavored butterfat fraction according to any one of claims 1 to 7 or a flavored butterfat emulsion according to any one of claims 8 to 18.

21. A method of preparing a healthy food product comprising replacing some or all of the native fat in a food product with a flavored butterfat fraction according to any one of claims 1 to 7 or a flavored butterfat fraction emulsion according to any one of claims 8 to 18.

22. A method of preparing a food product having a reduced level of saturated fatty acid comprising replacing some or all of the native fat saturated fatty acid in a food product with a flavored butterfat fraction according to any one of claims 1 to 7 or a flavored butterfat fraction according to any one of claims 1 to 8.

23. A method of preparing a food product having an increased level of monounsaturated fatty acids comprising replacing some or all of the native fat saturated fatty acid in a food product with a flavored butterfat fraction according to any one of claims 1 to 7 or a flavored butterfat fraction according to any one of claims 1 to 8.

24. A method of preparing a food product having a reduced level of total fat comprising replacing some or all of the native fat saturated fatty acid in a food product with a flavored butterfat fraction according to any one of claims 1 to 7 or a flavored butterfat fraction according to any one of claims 1 to 8.

25. A method according to any one of claims 20 to 24, wherein the food product is chosen from dairy-flavored products, cream cheese, ice cream, spreads, cultured products, confections, baked goods, and meat products.
